# EUROPEAN PATENT SPECIFICATION

(11) **EP 3 695 934 B1**
(45) Date of publication and mention of the grant of the patent: **04.03.2026**
(21) Application number: 18867165.5
(22) Date of filing: 30.07.2018
(51) Int. Cl.: B03C 1/033, B03C 1/14, B23Q 11/00, B23Q 17/00

(54) **COOLANT PROCESSING DEVICE**
KÜHLMITTELVERARBEITUNGSVORRICHTUNG
DISPOSITIF DE TRAITEMENT DE LIQUIDE DE REFROIDISSEMENT

(30) Priority: 13.10.2017 JP 2017199030
(43) Date of publication of application: 19.08.2020
(73) Proprietor: Sumitomo Heavy Industries Finetech, Ltd., Kurashiki-shi, Okayama 713-8501 (JP)
(72) Inventor: IWAO Yoshiteru, Kurashiki-shi Okayama 713-8501 (JP); ITADANI Kaisei, Kurashiki-shi Okayama 713-8501 (JP)
(74) Representative: Louis Pöhlau Lohrentz
(86) International application number: PCT/JP2018/028464
(87) International publication number: WO 2019/073662

(56) References cited:
- EP-A1- 2 656 920
- WO-A1-2014/088620
- CN-A- 102 478 840
- CN-A- 105 170 319
- JP-A- 2002 195 854
- JP-A- 2004 093 256
- JP-A- 2011 237 459
- JP-A- 2013 043 163
- JP-A- 2013 184 241
- JP-A- H 091 176
- US-A- 4 293 410
- US-A1- 2002 078 742
- US-A1- 2002 078 742
- US-B2- 8 989 611

## Description

### Technical Field

The present invention relates to a coolant treatment device that removes a magnetic body such as a metallic component contained in a used coolant liquid.

### Background Art

As a metal working machine, there is a working machine having a magnetic metal as a material to be cut, and such a metal working machine uses a coolant liquid (cooling liquid). The used coolant liquid is recovered as coolant liquid containing cutting chips. The used coolant liquid which is recovered is reused by separating the cutting chips therefrom. As a device that separates the cutting chips from the coolant liquid, there is known a coolant treatment device that uses a magnet to separate the cutting chips or the like which are magnetic bodies. For example, PTL 1 discloses a rotary drum type magnetic separation apparatus that includes a rotary drum in which a plurality of magnets are disposed, and separates cutting chips or the like from a used coolant liquid. In the rotary drum type magnetic separation apparatus, since the used coolant liquid passes between the rotary drum and a bottom plate that is disposed along the rotary drum, a magnetic force of the rotary drum is applied to the cutting chips, and thus, the cutting chips are separated or recovered. In addition, sprockets are provided at both ends of the rotary drum to transmit the rotation of a motor. PTL 2 discloses a device for suppressing slit clogging which cleans a slit of a rotating-drum type magnetic separator which separates and recovers sludge included in used coolant liquid. PTL 3 discloses a gear state diagnostic method using frequency demodulation in which a pulse generator is mounted in proximity to a gear within a transmission case, and output signals of the pulse generator are modulated and sampled, after which the signals are demodulated to track changes in gear rotation. PTL 4 discloses a rotation detecting sensor for detecting the number of rotations and/or the direction of rotation of a rotating body. PTL 5 discloses a replaceable unit for an image forming device having a falling paddle for toner level sensing. PTL 6 discloses a magnetic filter including a magnetic cylinder with a stripper. PTL 7 discloses a magnetic separator control system including a feeding speed detection unit and a rotation speed detection unit for detecting rotation speed of a rotating cylinder, the control system being suited for multi-stage separation. PTL 8 discloses a magnetic separator that controls the rotation of a rotary drum in such a manner that the circumferential speed of magnetic attraction members and the flow velocity of the activated sludge in a flow passage are made the same. PTL 9 discloses a magnetic drum separator system, with a plurality of sensors, including a height sensor and pressure sensor for detecting slurry pressure, flow rate sensors for detecting flow rates of supplied slurry, discharged tailings and concentrate, as well as a magnetic sensor for detecting a changes of the magnetic field. A control system uses the information measured by these sensors to control the inlet/ feed, the rotational speed of the drum and the strength of the magnetic field. Lastly, PTL 10 discloses a magnetic drum separator system to separate dry bulk material, wherein a sensor can measure an increase in torque of the drum, by measuring the current used by the motor, when scraps are caught in a gap between the drum and a cover. The cover can then be moved to leave a larger space between cover and drum, such that the blockage can be removed.

### Citation List

### Patent Literature

[PTL 1] Japanese Unexamined Patent Publication No. 2013-184241
[PTL 2] European Unexamined Patent Publication No. 2 656 920
[PTL 3] United States Unexamined Patent Publication No. 2002/078742
[PTL 4] Japanese Unexamined Patent Publication No. 2002 195854
[PTL 5] United States Patent No. 8 989 611
[PTL 6] United States Patent No. 4 293 410
[PTL 7] Chinese Patent Application No. CN 102 478 840 A
[PTL 8] Japanese Patent Application No. JP HO9 1176 A
[PTL 9] Chinese Patent Application No. CN105170319A
[PTL 10] Japanese Patent Application No. JP2013043163A

### Summary of Invention

### Technical Problem

When a trouble such as a loss of the sprocket occurs, the rotation of the rotary drum may stop or a rotation failure may occur. When the coolant liquid is supplied to the coolant treatment device in a state where the rotary drum stops, the magnetic body deposits between the rotary drum and the bottom plate, and the flow of the coolant liquid stops. When the coolant liquid is continuously supplied to the coolant treatment device, there occurs a problem that the coolant liquid is not discharged from a discharge part of the coolant treatment device and overflows from an upper end of a main body of the coolant treatment device. When an overflow of the coolant liquid occurs, since the inside or the surroundings of the coolant treatment device is contaminated, a lot of efforts are required to perform cleaning.

Then, a task of the invention is to beforehand prevent a problem such as an overflow of the coolant liquid caused by a stop of the rotary drum in the coolant treatment device that removes the magnetic body from the used coolant liquid.

### Solution to Problem

As a result of intensive examination of the foregoing task, the inventors have found the fact that in the coolant treatment device which removes the magnetic body from the used coolant liquid, it is possible to immediately notice an abnormal stop of the rotary drum by detecting an abnormality in the rotation of the rotary drum and to beforehand prevent an occurrence of a problem such as an overflow of the coolant liquid, and have completed the invention.

Namely, the invention provides a coolant treatment device according to claim 1.

According to an embodiment of the invention, in order to solve the foregoing problem, there is provided a coolant treatment device that removes a magnetic body from a used coolant liquid, the device including a rotary drum in which a plurality of magnets are disposed; and a rotation detector that detects an abnormality in a rotation of the rotary drum.

Since the coolant treatment device includes the rotation detector that detects an abnormality in the rotation of the rotary drum, it is possible to immediately notice an abnormal stop of the rotary drum. Therefore, it is possible to beforehand prevent an occurrence of a problem such as an overflow of the coolant liquid.

In the embodiment of the coolant treatment device of the invention, the coolant treatment device further includes a main body that accommodates the rotary drum inside thereof, in which the rotation detector is installed outside the main body.

According to this aspect, since the rotation detector is disposed outside the main body of the coolant treatment device, it is possible to prevent the rotation detector from being contaminated by the coolant liquid and accurately detect a rotation abnormality.

In the embodiment of the coolant treatment device of the invention, the coolant treatment device further includes a driven rotator that is driven to rotate with the rotary drum, in which the rotation detector detects the abnormality in the rotation of the rotary drum by detecting an abnormality in a rotation of the driven rotator.

According to this aspect, the rotation detector indirectly detects an abnormality in the rotation of the rotary drum by detecting an abnormality in the rotation of the driven rotator. When the coolant treatment device is in operation, a lower substantially half of the rotary drum is in a state of being immersed in the coolant liquid. For this reason, when the rotation detector is installed on the rotary drum, the rotation detector has a risk of being contaminated by the coolant liquid. Then, since the driven rotator is installed at a position where the driven rotator is difficult to contaminate, and indirectly detects an abnormality in the rotation of the rotary drum, it is possible to prevent the rotation detector from being contaminated by the coolant liquid and accurately detect a rotation abnormality

In the embodiment of the coolant treatment device of the invention, the coolant treatment device further includes a squeezing roller that is driven to rotate with the rotary drum, in which the rotation detector detects the abnormality in the rotation of the rotary drum by detecting an abnormality in a rotation of the squeezing roller.

According to this aspect, the rotation detector indirectly detects an abnormality in the rotation of the rotary drum by detecting an abnormality in the rotation of the squeezing roller. When the coolant treatment device is in operation, the lower substantially half of the rotary drum is in a state of being immersed in the coolant liquid. On the other hand, the squeezing roller is installed above a liquid level of the coolant liquid. Therefore, the rotation detector indirectly detects an abnormality in the rotation of the rotary drum by detecting an abnormality in the rotation of the squeezing roller; and thereby, it is possible to prevent the rotation detector from being contaminated by the coolant liquid and accurately detect a rotation abnormality.

In the embodiment of the coolant treatment device of the invention, the coolant treatment device further includes inflow amount adjusting means for adjusting an inflow amount of the coolant liquid flowing into the main body, in which the inflow amount adjusting means controls the inflow amount depending on the abnormality in the rotation of the rotary drum detected by the rotation detector.

According to this aspect, in a case where the rotation of the rotary drum stops, it is possible to immediately reduce or stop the inflow amount of the coolant liquid flowing into the main body. For this reason, it is possible to prevent an overflow of the coolant liquid or the like.

In addition, in a case where the rotating speed decreases due to an abnormality in the rotation of the rotary drum, the coolant treatment device becomes less effective in removing the magnetic body. However, since the inflow amount of the coolant liquid flowing into the main body decreases, it takes time for the coolant liquid to pass between the rotary drum and a bottom plate; and thereby, it is possible to sufficiently remove the magnetic body from the coolant liquid.

In the embodiment of the coolant treatment device of the invention, the coolant treatment device further includes a supply flow path that supplies the coolant liquid to the main body; an avoidance flow path that branches from the supply flow path to avoid a supply of the coolant liquid to the main body; and a switching valve that switches between the supply flow path and the avoidance flow path, in which the switching valve switches a flow path depending on the abnormality in the rotation of the rotary drum detected by the rotation detector.

According to this aspect, the switching valve is provided to switch the flow path, through which the coolant liquid passes, from the supply flow path to the avoidance flow path; and thereby, it is possible to rapidly stop the supply of the coolant liquid to the main body with a simple operation. In addition, the coolant liquid which the avoidance flow path avoids supplying to the main body is supplied to another magnetic body removal device that performs a filtration treatment or the like; and thereby, it is possible to prevent an overflow of the coolant liquid or the like without stopping the operation of the entire coolant liquid treatment system.

In the embodiment of the coolant treatment device of the invention, the coolant treatment device further includes a control unit that divides data obtained from the rotation detector into two or more data classes, and performs a process depending on each data class.

According to this aspect, for example, data of the detected rotation abnormality from the rotation detector is divided into a data class indicating a state where the rotating speed of the rotary drum decreases, and a data class indicating a state where the rotary drum stops, and it is possible to perform a process depending on each data class, such as performing control to reduce the inflow amount of the used coolant liquid flowing into the main body when the data class indicates the state where the rotating speed decreases, and stopping the supply of the used coolant liquid to the main body when the data class indicates the state where the rotation stops. Accordingly, it is possible to continuously operate the coolant treatment device as long as possible while preventing a problem such as an overflow of the coolant liquid.

### Advantageous Effects of Invention

According to the invention, in the coolant treatment device that removes the magnetic body from the used coolant liquid, it is possible to beforehand prevent a problem such as an overflow of the coolant liquid caused by a stop of the rotary drum.

### Brief Description of Drawings

Fig. 1 is a schematic description view showing the internal structure of a coolant treatment device according to a first embodiment of the invention.
Fig. 2 is a schematic description view showing the external structure of the coolant treatment device according to the first embodiment of the invention.
Fig. 3 is a schematic description view showing the structure of a rotation detector of the coolant treatment device according to the first embodiment of the invention. Incidentally, Fig. 3 is a sectional view which is taken along an alternated long and short dash line A-A in Fig. 2 and seen from the direction of the black arrow.
Fig. 4 is a flowchart describing one example of control of a control unit of the coolant treatment device according to the first embodiment of the invention.
Fig. 5 is a schematic description view showing the structure of a coolant liquid treatment system including the coolant treatment device according to the first embodiment of the invention.
Fig. 6 is a schematic description view showing the external structure of a coolant treatment device according to a second embodiment of the invention.
Fig. 7 is a schematic description view describing the structure of the rotation detector of the coolant treatment device according to the second embodiment of the invention. Incidentally, Fig. 7 is a sectional view which is taken along an alternated long and short dash line B-B in Fig. 6 and seen from the direction of the black arrow.

### Description of Embodiments

A coolant liquid is a cooling liquid that is supplied to a metal cutting machine or the like having a magnetic metal as a material to be cut. When the coolant liquid is used as a cooling liquid for the metal cutting machine or the like, the coolant liquid is discharged a used coolant liquid containing a magnetic body such as magnetic sludge. A coolant treatment device according to an embodiment of the invention recovers the magnetic body such as magnetic sludge contained in the used coolant liquid by using a magnetic force. The used coolant liquid is not particularly limited as long as the used coolant liquid is a liquid containing the magnetic body, and may be an oily liquid or a water-soluble liquid.

Hereinafter, embodiments of the invention will be described in detail with reference to the drawings.

### [First embodiment]

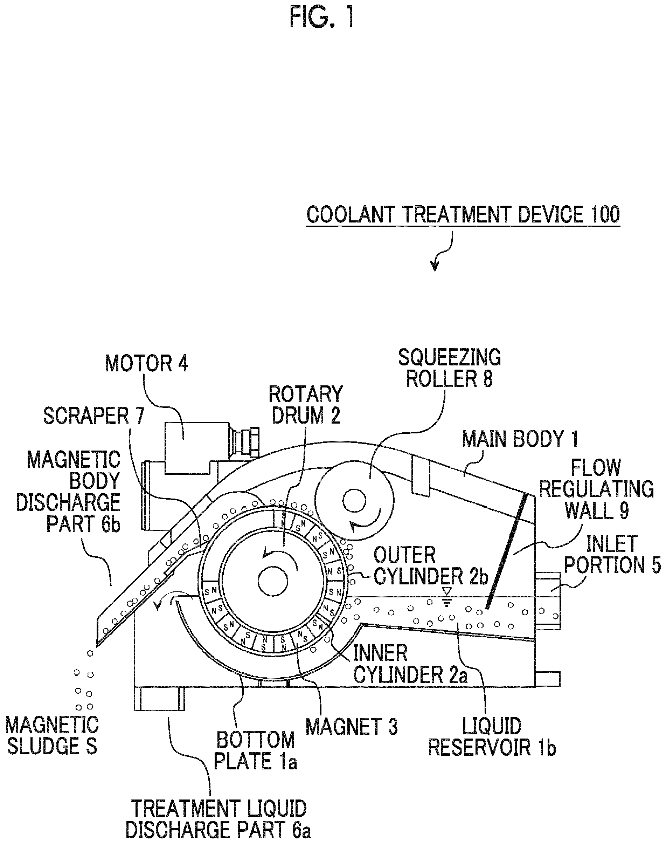

Fig. 1 shows the internal structure of a coolant treatment device 100 according to a first embodiment of the invention. The coolant treatment device 100 according to the embodiment of the invention includes a main body 1 formed of a rectangular casing; a rotary drum 2 that is suspended in a width direction (in a direction vertical to the paper surface of Fig. 1) of the main body 1; and a squeezing roller 8 that rotates in a state where the squeezing roller 8 is in contact with the rotary drum 2. The main body 1 includes an inlet portion 5 through which the coolant liquid containing the magnetic sludge (magnetic body) flows into the main body 1; a treatment liquid discharge part 6a that discharges a treatment liquid from which the magnetic sludge is removed; and a magnetic body discharge part 6b that discharges the magnetic sludge. Incidentally, the rotary drum 2 is disposed between the inlet portion 5 and the treatment liquid discharge part 6a.

In a lower portion of the main body 1, a bottom plate 1a formed along the shape of the rotary drum 2 is provided and a liquid reservoir 1b storing the coolant liquid is formed. After the coolant liquid which is supplied to the main body 1 by a pump or the like flows from the inlet portion 5, and is temporarily stored in the liquid reservoir 1b, the coolant liquid passes between the rotary drum 2 and the bottom plate 1a. When the coolant liquid passes between the rotary drum 2 and the bottom plate 1a, the magnetic sludge contained in the coolant liquid adheres to the rotary drum 2 due to the magnetic fluxes of the rotary drum 2. The treatment liquid from which the magnetic sludge is removed by the rotary drum 2 overflows the bottom plate 1a and is discharged from the treatment liquid discharge part 6a.

In addition, a flow regulating wall 9 is installed apart from the inlet portion 5 inside the main body 1. The flow regulating wall 9 is made of a plate that is hung from a top surface of the main body 1, and a lower end of the flow regulating wall 9 is positioned below a liquid level of the coolant liquid stored in the liquid reservoir 1b. Since the flow speed of the inlet coolant liquid increases when the inlet coolant liquid passes between the flow regulating wall 9 and the bottom plate 1a, the flow regulating wall 9 has an effect of preventing the magnetic sludge from depositing on a bottom portion of the liquid reservoir 1b.

### <Rotary drum>

The rotary drum 2 separates the magnetic sludge from the coolant liquid by magnetically attracting the magnetic sludge. The rotary drum 2 is supported in a direction substantially perpendicular to the flow of the coolant liquid and in a substantially horizontal direction. In addition, the rotary drum 2 is installed such that a lower substantially half of the rotary drum 2 is submerged below the liquid level of the coolant liquid and an upper substantially half thereof is exposed from the liquid level.

The rotary drum 2 includes two cylindrical bodies, namely, an inner cylinder 2a and an outer cylinder 2b, and a plurality of magnets 3 are fixed to an outer periphery of the inner cylinder 2a. The plurality of magnets 3 can magnetically attract the magnetic sludge to an outer peripheral surface of the outer cylinder 2b by applying a predetermined magnetic force to the outer peripheral surface of the outer cylinder 2b. Incidentally, the two cylindrical bodies are made of a non-magnetic material such as stainless steel, and a magnetic force is not generated from the cylindrical bodies.

In the rotary drum 2, a range of the outer peripheral surface of the outer cylinder 2b to which the magnetic force is applied can be set by the disposition of the magnets 3 fixed to the outer periphery of the inner cylinder 2a. The range of the outer peripheral surface of the outer cylinder 2b to which the magnetic force is applied is appropriately designed based on the outer diameter of the rotary drum 2, the position of a scraper 7, and the like. In the coolant treatment device 100 of the first embodiment, as shown in Fig. 1, the magnets are disposed in the range of substantially three-fourths of an outer peripheral surface of the inner cylinder 2a. Namely, a magnetic force is applied to the range of substantially three-fourths of the outer peripheral surface of the outer cylinder 2b from a portion immersed in the liquid reservoir 1b to a top portion in the rotary drum 2. In addition, the magnets are not disposed on the remaining substantially one-fourth of the outer peripheral surface of the inner cylinder 2a, and a magnetic force is not applied to the remaining substantially one-fourth (the vicinity of the scraper 7) of the outer peripheral surface of the outer cylinder 2b.

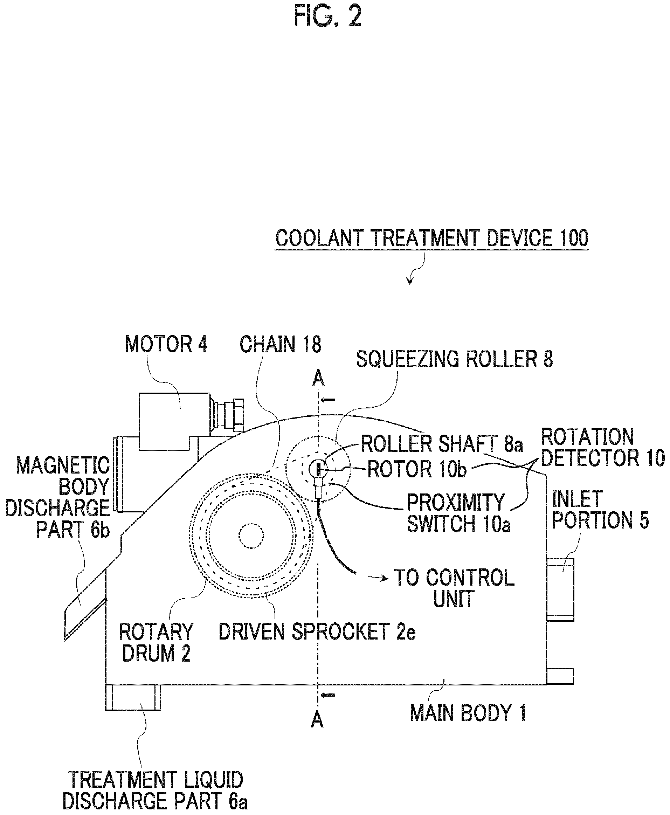

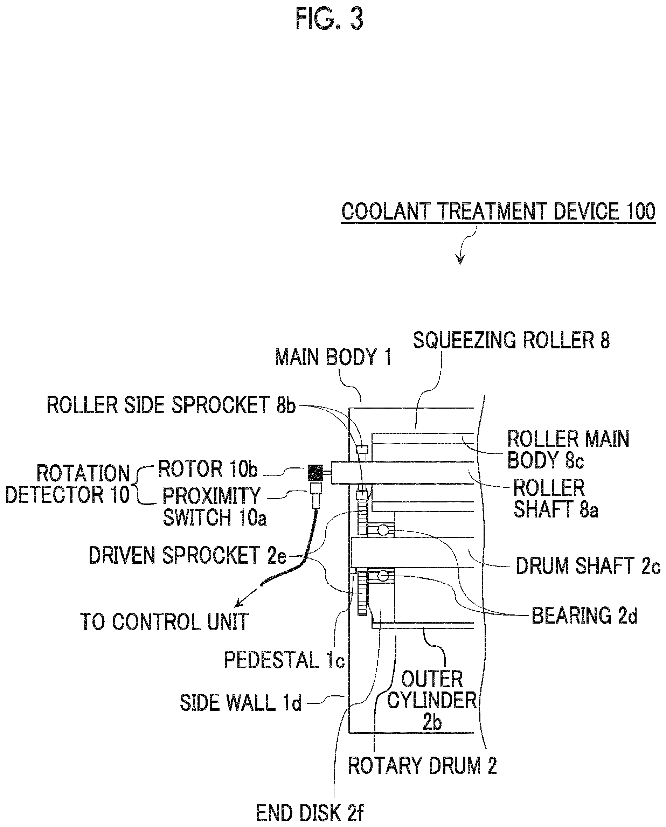

Subsequently, means for fixing the rotary drum 2 to the main body 1 will be described with reference to Fig. 3. Incidentally, a region of the rotary drum 2 in Fig. 3 is not a sectional view taken along an alternated long and short dash line A-A in Fig. 2, but is a sectional view of the rotary drum 2. As shown in Fig. 3, the rotary drum 2 includes a drum shaft 2c as a center axis, and the drum shaft 2c is fixed to a pedestal 1c, which protrudes from an inner wall of the main body 1, with fixing members such as bolts.

The inner cylinder 2a (the inner cylinder 2a and the magnets 3 are not shown in Fig. 3) is directly fixed to the drum shaft 2c. On the other hand, end disks 2f are fixed to both ends of the outer cylinder 2b, and bearings 2d such as ball bearings are provided at the centers of the end disks 2f. Then, the outer cylinder 2b is installed on the drum shaft 2c via the bearings 2d.

In addition, a driving sprocket which transmits the driving force of a motor 4 is fixed to the outside (a side wall side of the main body 1) of one (end disk opposite to the end disk shown in Fig. 3, and not shown) of the end disks 2f, and a driven sprocket 2e which transmits the power of the motor 4 to the squeezing roller 8 is fixed to the outside (a side wall 1d of the main body 1) of the other (end disk shown in Fig. 3) of the end disks 2f.

The driving sprocket (not shown) is connected to the motor 4 via a chain, and the driving force of the motor 4 is transmitted to the outer cylinder 2b of the rotary drum 2 via the chain, the driving sprocket, and the end disk. Accordingly, the outer cylinder 2b of the rotary drum 2 rotates. Incidentally, the rotation direction of the outer cylinder 2b is a direction reverse to (counterclockwise direction as seen from the paper surface of Fig. 1) the flow of the coolant liquid that passes below the outer cylinder 2b.

The driven sprocket 2e is connected to a roller side sprocket 8b (refer to Fig. 3) of the squeezing roller 8 via a chain 18, and the power of the motor 4 is transmitted to the squeezing roller 8 via the outer cylinder 2b of the rotary drum 2, the end disk 2f, the driven sprocket 2e, and the chain 18.

Incidentally, in the first embodiment, the coolant treatment device including one rotary drum 2 is provided as an example; however, the coolant treatment device according to the embodiment of the invention may include a plurality of the rotary drums 2. In addition, a type of rotary drum in which the outer cylinder is fixed and the inner cylinder rotates may be adopted.

### <Squeezing roller>

The squeezing roller 8 is installed in the vicinity of the top portion of the rotary drum 2 to squeeze a liquid content out from the magnetic sludge that is magnetically attracted to the rotary drum 2. A shown in Fig. 3, the squeezing roller 8 includes a roller shaft 8a and the roller side sprocket 8b and a roller main body 8c which are fixed to the roller shaft 8a. In addition, one end of the roller shaft 8a extends outward from the main body 1, and a rotor 10b forming a rotation detector 10 is fixed to a tip of the roller shaft 8a.

As described above, the roller side sprocket 8b is connected to the driven sprocket 2e fixed to the end disk 2f of the rotary drum 2, via the chain 18. Accordingly, the squeezing roller 8 rotates in connection with the rotary drum 2.

The roller main body 8c has an elastic body such as rubber disposed on the surface, namely, the outer peripheral surface thereof, and is in press contact with the outer peripheral surface of the outer cylinder 2b of the rotary drum 2 with a predetermined force. As the elastic body disposed on the surface of the roller main body 8c, elastic bodies such as chloroprene (CR) rubber and nitrile (NBR) rubber are mainly used; however, for example, an uncrosslinked polyurethane material mainly composed of polyester polyol may be used.

### <Scraper>

The scraper 7 is installed in the vicinity of the top portion of the rotary drum 2 to scrape the magnetic sludge, from which the liquid content is squeezed out by the squeezing roller 8, from the rotary drum 2 (refer to Fig. 1). The scraper 7 is installed in a region to which a magnetic force is not applied, and is in contact with the outer peripheral surface of the outer cylinder 2b of the rotary drum 2.

Subsequently, the operation of the rotary drum 2 will be described. Due to the application of a magnetic force, the magnetic sludge adheres to the outer peripheral surface of the rotary drum 2 immersed in the coolant liquid. Here, when the outer cylinder 2b of the rotary drum 2 rotates, the magnetic sludge moves in the rotation direction of the outer cylinder 2b due to a frictional force between the outer peripheral surface of the outer cylinder 2b and the magnetic sludge while being magnetically attracted to the outer peripheral surface of the rotary drum 2. Then, the magnetically attracted magnetic sludge passes between the outer peripheral surface of the rotary drum 2 and the squeezing roller 8; and thereby, it is possible to separate and recover the magnetic sludge that has a small liquid content since the liquid content of the magnetic sludge is squeezed out. Subsequently, the magnetic sludge from which the liquid content is squeezed out moves to a position where a magnetic force is not applied, and is scraped from the outer peripheral surface of the rotary drum 2 by the scraper 7. A magnetic sludge S which is scraped is discharged from the magnetic body discharge part 6b.

### <Rotation detector>

The rotation detector 10 detects an abnormality in the rotation of the rotary drum 2. When a driving force generated by the rotation of the motor 4 is not successfully transmitted to the rotary drum 2 due to a trouble such as a loss of the sprocket, the rotation of the outer cylinder 2b of the rotary drum 2 may stop or a rotation failure may occur (rotation abnormality may occur). When the coolant liquid is supplied to the coolant treatment device 100 in a state where the rotary drum 2 stops, the magnetic sludge deposits between the rotary drum 2 and the bottom plate 1a, and the flow of the coolant liquid stops. When the coolant liquid is continuously supplied to the coolant treatment device 100, there occurs a problem that the coolant liquid is not discharged from the treatment liquid discharge part 6a of the coolant treatment device 100 and overflows from an upper end of the main body 1 of the coolant treatment device 100. Since the coolant treatment device 100 according to the embodiment of the invention is provided with the rotation detector 10, it is possible to immediately notice an abnormal stop of the rotary drum, and deal with the abnormal stop before the occurrence of a problem such as an overflow of the coolant liquid.

As shown in Fig. 2, the rotation detector 10 is installed outside the main body 1. In addition, as shown in Fig. 3, the rotation detector 10 includes the rotor 10b that is fixed to the tip of the roller shaft 8a of the squeezing roller 8, and a proximity switch 10a that is installed in the vicinity of the rotor 10b.

The rotor 10b is a rectangular plate-shaped member, and rotates as the roller shaft 8a rotates. The proximity switch 10a is a device that measures a distance between the rotor 10b and the proximity switch 10a. When the rotor 10b rotates at a constant rotating speed, the distance between the proximity switch 10a and the rotor 10b fluctuates at a constant rhythm, and thereby, it is possible to recognize that the rotating speed is stable. On the other hand, when an abnormality occurs in the rotating speed of the rotor 10b, the distance between the proximity switch 10a and the rotor 10b which fluctuates at the constant rhythm comes to fluctuate irregularly. It is possible to detect an abnormality in the rotation of the squeezing roller 8 from this irregular fluctuation. In addition, since the squeezing roller 8 rotates in connection with the rotation of the outer cylinder 2b of the rotary drum 2 via the roller side sprocket 8b, it is possible to determine that an abnormality occurs in the rotation of the rotary drum 2, by detecting an abnormality in the rotation of the squeezing roller 8. Incidentally, data measured by the proximity switch 10a is transmitted to a control unit such as a computer.

The rotation detector 10 may be any type of device as long as the device can detect an abnormality in the rotation of the rotary drum 2. In addition to a proximity switch that measures the distance between the rotor and the proximity switch, examples of the proximity switch of the first embodiment include means for detecting a reflector or a magnet with an optical detection sensor, a magnetic sensor, or the like, the reflector or the magnet being attached to the squeezing roller 8, the outer peripheral surface of the rotary drum 2, the sprocket, or the like, and means for controlling the rotating speed of the motor 4 via an inverter to detect a rotation abnormality based on a fluctuation in the current value of the inverter. Also in a case where the motor 4 rotates normally, since the rotary drum 2 may not rotate normally, for example, when a loss of the sprocket occurs, it is preferable to detect an abnormality in the rotation of the rotary drum 2 or a rotator that rotates synchronously with the rotation of the rotary drum 2.

In addition, a position where the rotation detector 10 is installed may be any position. In the first embodiment, the rotation detector 10 is installed outside the main body 1; however, the rotation detector 10 may be installed inside the main body 1. Since the rotation detector 10 is installed outside the main body 1, it is possible to prevent the rotation detector 10 from being contaminated by the coolant liquid and accurately detect a rotation abnormality.

In a case where the rotation detector 10 is disposed outside the main body 1, it is preferable to extend only the rotary shaft so as to minimize a space for installing the rotation detector 10. In the coolant treatment device 100 of the first embodiment, since the drum shaft 2c of the rotary drum 2 is a fixed shaft, an abnormality in the rotation of the rotary drum 2 is indirectly detected by extending the roller shaft 8a of the squeezing roller 8 and detecting an abnormality in the rotation of the squeezing roller 8. In addition, since the squeezing roller 8 is installed above the liquid level of the coolant liquid, an effect of preventing the rotation detector 10 from being contaminated by the coolant liquid is also obtained.

Incidentally, the detection of an abnormality in the rotation of the rotary drum 2 may be an indirect detection of a rotation abnormality as in the first embodiment, or may be a direct detection of an abnormality in the rotation of the rotary drum 2 in a case where the rotation detector 10 is provided in the rotary drum 2.

### <Control unit>

It is preferable that the coolant treatment device 100 according to the embodiment of the invention is provided with the control unit which performs automatic control to not cause a problem such as an overflow of the coolant liquid in a configuration where the rotation detector 10 detects an abnormality in the rotation in the rotary drum 2. Control means for performing control by using the control unit is not particularly limited as long as the means limits the inflow amount of the coolant liquid into the main body 1. Examples of the control means include control means for reducing or stopping an inflow amount into the main body 1 by using inflow amount adjusting means for adjusting the inflow amount of the coolant liquid flowing into the main body 1, or control means for switching the flow of the coolant liquid to an avoidance flow path by operating a switching valve in a configuration where a supply flow path of the coolant liquid to the main body 1 branches and the avoidance flow path which avoids the supply of the coolant liquid to the main body 1 is provided.

Incidentally, in the coolant treatment device according to the embodiment of the invention, not only control may be performed by the control unit, but also when a rotation abnormality is detected, an operator may adjust the flow amount of the pump or the like or may operate the switching valve to switch the flow path to the avoidance flow path.

The inflow amount adjusting means controls the flow amount in response to a rotation abnormality detected by the rotation detector 10. For example, the inflow amount adjusting means is a pump or the like to which the control unit sends a command for adjusting the flow amount depending on data when the data is input from the rotation detector 10 to the control unit.

It is preferable that the control unit divides the data obtained from the rotation detector into two or more data classes, and performs a process depending on each data class. For example, the data obtained from the rotation detector is divided into a data class (1) indicating a case where a rotation abnormality such as the stop of rotation occurs, and a data class (2) indicating a case where a rotation abnormality such as the fluctuation of the rotating speed occurs, and a process is performed depending on each data class. Examples of the process depending on the data class (1) include a process of stopping the flow of the coolant liquid into the main body 1, for example, by using the inflow amount adjusting means, and a process of switching the switching valve for the supply flow path to the avoidance flow path to avoid the coolant liquid. In addition, examples of the process depending on the data class (2) include a process of reducing the inflow amount of the coolant liquid into the main body 1, for example, by using the inflow amount adjusting means.

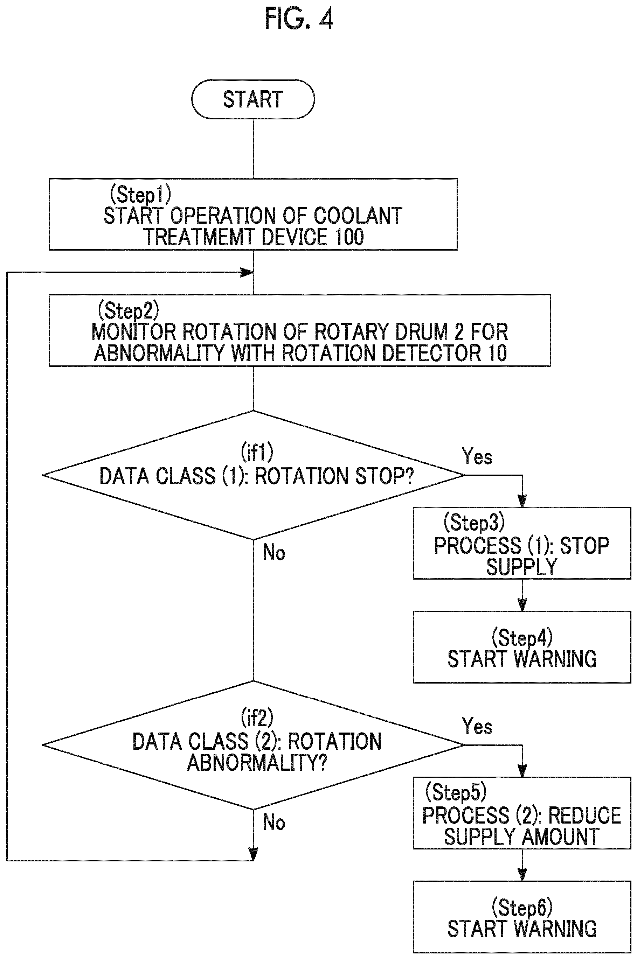

Fig. 4 is a flowchart describing one example of control of the control unit of the coolant treatment device according to the embodiment of the invention. As shown in Fig. 4, firstly, the operation of the coolant treatment device 100 starts (Step S1). Subsequently, the rotation of the rotary drum 2 is indirectly monitored by detecting the rotation of the squeezing roller 8 with the rotation detector 10 (Step S2). The control unit stores data indicating a case where the rotation of the rotary drum 2 stops as the data class (1), and data indicating a case where a rotation abnormality such as a fluctuation in the rotating speed of the rotary drum 2 occurs as the data class (2). It is determined whether or not data from the rotation detector 10 belongs to the data class (1) (if1), and in a case where the data belongs to the data class (1), the pump installed in the supply flow path is stopped, and the supply of the coolant liquid to the main body 1 is stopped (Step S3). Subsequently, a warning is started (Step S4). The warning is performed by an alarm sound, an alarm screen display, or the like. On the other hand, in a case where the data from the rotation detector 10 does not belong to the data class (1), it is determined whether or not the data belongs to the data class (2) (if2). In a case where the data belongs to the data class (2), the supply amount of the coolant liquid to the main body is reduced by the pump installed in the supply flow path (Step S5), and subsequently, an alarm is started (Step S6). In a case where the data does not belong to the data class (2), the rotation is continuously monitored for abnormality. It is possible to immediately notice an abnormality in the rotation of the rotary drum 2 with this control, and to beforehand prevent an occurrence of a problem such as an overflow of the coolant liquid.

The warning or the alarm screen display may be performed in the coolant treatment device, or may be performed in the control unit (room) that is installed apart from the coolant treatment device. In a case where control is performed by an operator, since the operator monitors the control unit at all times, it is preferable that the alarm screen display is displayed in the control unit. In addition, it is possible to immediately operate the pump from the control unit by displaying the alarm screen display in the control unit.

### [Coolant liquid treatment system]

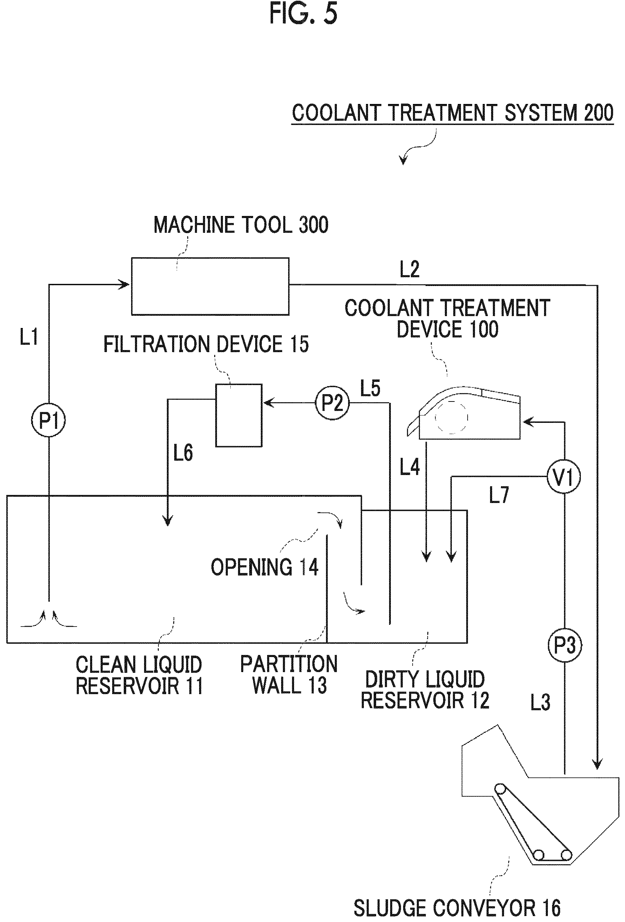

Fig. 5 shows the entire configuration of a coolant liquid treatment system 200 including the coolant treatment device 100 according to the first embodiment of the invention and a machine tool 300. Incidentally, the machine tool 300 is a metal cutting machine such as a grinder or a cutting machine that uses the coolant liquid, and generates particles such as various sizes of chips.

The coolant liquid treatment system 200 according to the embodiment of the invention includes a sludge conveyor 16 that settles and separates magnetic sludge from a used coolant liquid discharged from the machine tool 300; the coolant treatment device 100 that magnetically separates magnetic sludge from a supernatant of the sludge conveyor 16; a dirty liquid reservoir 12 that stores a treatment liquid of the coolant treatment device 100; a filtration device 15 that filters magnetic sludge from the treatment liquid stored in the dirty liquid reservoir 12 by using a filter or the like; and a clean reservoir 11 that stores a filtrate filtered by the filtration device 15. Then, the filtrate stored in the clean reservoir 11 is reused as a coolant liquid for the machine tool 300.

The sludge conveyor 16 is a device that scrapes and removes the sludge settled in a bottom portion of a storage reservoir. The used coolant liquid discharged from the machine tool 300 is supplied to the sludge conveyor 16 through a flow path L2, and the magnetic sludge settled by settlement separation is removed. The supernatant of the sludge conveyor 16 is supplied to the main body 1 of the coolant treatment device 100 through a supply flow path L3 by a pump P3. A magnetic separation process in the coolant treatment device 100 is as described above.

The treatment liquid treated by the coolant treatment device 100 is supplied to the dirty liquid reservoir 12 through a flow path L4. The treatment liquid stored in the dirty liquid reservoir 12 is supplied to the filtration device 15 through a flow path L5 by a pump P2, and the magnetic sludge is removed therefrom. The filtrate on which a filtration treatment is performed by the filtration device 15 is supplied to the clean liquid reservoir 11 through a flow path L6.

In addition, the clean liquid reservoir 11 and the dirty liquid reservoir 12 are formed by providing a partition wall 13 in one treatment reservoir. Furthermore, an opening 14 is formed above the partition wall 13, and the clean liquid reservoir 11 and the dirty liquid reservoir 12 communicate with each other in an upper space. Incidentally, the clean liquid reservoir 11 and the dirty liquid reservoir 12 may be formed as separate reservoirs, and in this case, upper spaces of the clean liquid reservoir 11 and the dirty liquid reservoir 12 may communicate with each other through a pipe or the like. Since the upper spaces of the clean liquid reservoir 11 and the dirty liquid reservoir 12 communicate with each other, the filtrate of the clean liquid reservoir 11 can flow into the dirty liquid reservoir 12 as an overflow. For this reason, the treatment amount on which a filtration treatment is performed by the filtration device 15 is set to be larger than the amount of the coolant liquid to be supplied to the machine tool 300. Therefore, it is possible to prevent a trouble that the liquid level of the clean liquid reservoir 11 decreases and the supply of the coolant liquid to the machine tool 300 stops.

Incidentally, the coolant liquid treatment system 200 of the embodiment includes the sludge conveyor 16, the coolant treatment device 100 according to the embodiment of the invention, and the filtration device 15 as devices that remove the sludge. The devices may be able to remove the magnetic sludge to such degree that the coolant liquid can be reused. In addition to this, for example, a cyclone separator or the like which separates and removes the sludge by centrifugal force may be combined.

Subsequently, in the coolant treatment device 100 according to the embodiment of the invention, a method for performing control to not cause a problem such as an overflow of the coolant liquid in a case where an abnormality in the rotation of the rotary drum 2 is detected by the rotation detector 10 will be described. In the coolant liquid treatment system 200, the supply flow path L3 branches through a switching valve V1, and an avoidance flow path L7 which avoids the supply of the coolant liquid to the main body 1 is provided. In addition, the avoidance flow path L7 is connected to the dirty reservoir 12.

When an abnormality in the rotation of the rotary drum 2 is detected by the rotation detector 10, the switching valve V1 operates, and the flow of the coolant liquid is switched from the supply flow path L3 to the avoidance flow path L7. Then, the coolant liquid is supplied to the dirty reservoir 12, and the filtration device 15 performs a filtration treatment on the coolant liquid. Therefore, the supply of the coolant liquid to the coolant treatment device 100 stops; and thereby, it is possible to prevent an occurrence of a trouble such as an overflow. Then, while the supply of the coolant liquid to the coolant treatment device 100 stops, it is possible to investigate and repair an abnormality in the rotary drum 2. Incidentally, a load on the filtration device 15 increases temporarily while the avoidance flow path L7 is used; however, the increase in load may be dealt with by increasing the frequency of a cleaning process such as backwashing.

### [Second embodiment]

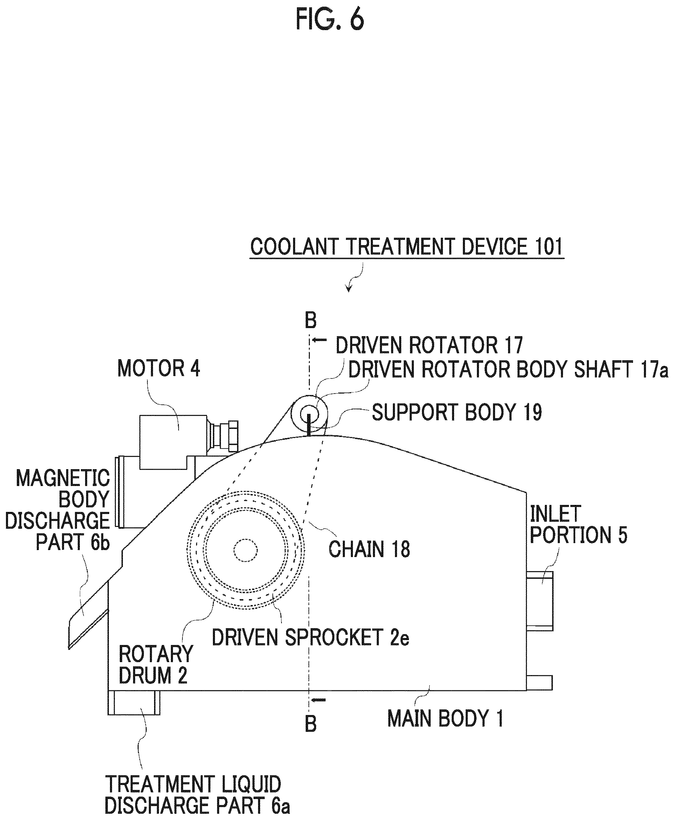

Fig. 6 shows the internal structure of a coolant treatment device 101 according to a second embodiment of the invention. The coolant treatment device 101 of the second embodiment includes a driven rotator 17 that indirectly detects an abnormality in the rotation of the rotary drum 2.

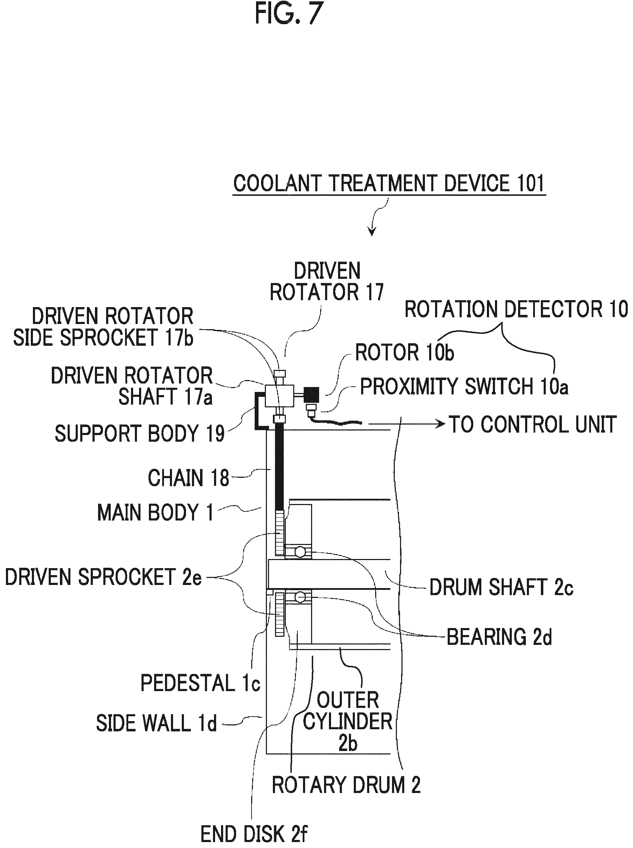

As shown in Fig. 7, the driven rotator 17 is supported on a support body 19 installed on the top surface of the main body 1. The driven rotator 17 includes a driven rotator shaft 17a, and a driven rotator side sprocket 17b that is fixed to the periphery of the driven rotator shaft 17a. The rotor 10b is fixed to an end portion of the driven rotator shaft 17a. The driven rotator side sprocket 17b is connected to the driven sprocket of the rotary drum 2 via the chain 18. The driven rotator 17 rotates synchronously with the rotation of the rotary drum 2.

Since the driven rotator 17 is provided, also in a coolant treatment device that do not include the squeezing roller, it is possible to install the rotation detector 10 at a position where the rotation detector 10 has no risk of being contaminated by the coolant liquid.

### Industrial Applicability

The coolant treatment device according to the embodiment of the invention is used to recover the magnetic body from the coolant liquid in a metal cutting machine having a magnetic metal as a material to be cut, a metal polishing machine having a magnetic metal as a material to be polished, or the like. It is possible to irrespectively use an oily coolant liquid or a water-soluble coolant liquid.

### Reference Signs List

100, 101: Coolant treatment device
1: Main body
1a: Bottom plate
1b: Liquid reservoir
1c: Pedestal
1d: Side wall
2: Rotary drum
2a: Inner cylinder
2b: Outer cylinder
2c: Drum shaft
2d: Bearing
2e: Driven sprocket
2f: End disk
3: Magnet
4: Motor
5: Inlet portion
6a: Treatment liquid discharge part
6b: Magnetic body discharge part
7: Scraper
8: Squeezing roller
8a: Roller shaft
8b: Roller side sprocket
8c: Roller main body
9: Flow regulating wall
10: Rotation detector
10a: Proximity switch
10b: Rotor
11: Clean liquid reservoir
12: Dirty liquid reservoir
13: Partition wall
14: Opening
15: Filtration device
16: Sludge conveyor
17: Driven rotator
17a: Driven rotator shaft
17b: Driven rotator side sprocket
18: Chain
19: Support body
200: Coolant liquid treatment system
L1, L2, L4 to L6: Flow path
L3: Supply flow path
L7: Avoidance flow path
P1 to P3: Pump
V1: Switching valve
S: Magnetic sludge

## Claims

1. A coolant treatment device (100) suitable for removal of a magnetic body from a used coolant liquid, the device (100) comprising:
a rotary drum (2) in which a plurality of magnets are disposed,
wherein
the coolant treatment device (100) further comprises a rotation detector (10), and
the rotation detector (10) is configured to detect an abnormality in a rotation of the rotary drum (2);
the coolant treatment device (100) further comprising:
inflow amount adjusting means for adjusting an inflow amount of the coolant liquid flowing into a main body (1),
wherein the inflow amount adjusting means is configured to control the inflow amount depending on the abnormality in the rotation of the rotary drum (2) detected by the rotation detector (10).

2. The coolant treatment device (100) according to claim 1, wherein
the main body (1) accommodates the rotary drum (2) inside thereof, and
the rotation detector (10) is installed outside the main body (1).

3. The coolant treatment device (100) according to claim 1 or 2, further comprising:
a driven rotator (17) that is driven to rotate with the rotary drum (2),
wherein the rotation detector (10) is configured to detect the abnormality in the rotation of the rotary drum (2) by detecting an abnormality in a rotation of the driven rotator (17).

4. The coolant treatment device (100) according to claim 1 or 2, further comprising:
a squeezing roller (8) that is driven to rotate with the rotary drum (2),
wherein the rotation detector (10) is configured to detect the abnormality in the rotation of the rotary drum (2) by detecting an abnormality in a rotation of the squeezing roller (8).

5. The coolant treatment device (100) according to any one of claims 1 to 4, further comprising:
a supply flow path (L3) that is configured to supply the coolant liquid to the main body (1);
an avoidance flow path (L7) that branches from the supply flow path (L3) to avoid a supply of the coolant liquid to the main body (1); and
a switching valve (V1) that is configured to switch between the supply flow path (L3) and the avoidance flow path (L7),
wherein the switching valve (V1) is configured to switch a flow path depending on the abnormality in the rotation of the rotary drum (2) detected by the rotation detector (10).

6. The coolant treatment device (100) according to any one of claims 1 to 5, further comprising:
a control unit that is configured to divide data obtained from the rotation detector (10) into two or more data classes, and to perform a process depending on each data class.

## Patentansprüche

1. Kühlmittelbehandlungsvorrichtung (100), die zum Entfernen eines magnetischen Körpers aus einem gebrauchten Kühlmittel geeignet ist, wobei die Vorrichtung (100) umfasst:
eine Drehtrommel (2), in der mehrere Magneten angeordnet sind,
wobei
die Kühlmittelbehandlungsvorrichtung (100) ferner einen Drehungsdetektor (10) umfasst, und
der Drehungsdetektor (10) konfiguriert ist, eine Abnormalität bei einer Drehung der Drehtrommel (2) zudetektieren;
die Kühlmittelbehandlungsvorrichtung (100) ferner umfasst:
Zuflussmengen-Anpassungsmittel zum Anpassen einer Zuflussmenge der in einen Hauptkörper (1) fließenden Kühlflüssigkeit,
wobei das Zuflussmengen-Anpassungsmittel konfiguriert ist, die Zuflussmenge abhängig von der durch den Drehungsdetektor (10) detektierten Abnormalität bei der Drehung der Drehtrommel (2) zu steuern.

2. Kühlmittelbehandlungsvorrichtung (100) nach Anspruch 1, wobei
der Hauptkörper (1) die Drehtrommel (2) in seinem Inneren aufnimmt und
der Drehungsdetektor (10) außerhalb des Hauptkörpers (1) installiert ist.

3. Kühlmittelbehandlungsvorrichtung (100) nach Anspruch 1 oder 2, ferner umfassend:
eine angetriebene Drehvorrichtung (17), die so angetrieben wird, dass sie sich mit der Drehtrommel (2) dreht,
wobei der Drehungsdetektor (10) konfiguriert ist, die Abnormalität bei der Drehung der Drehtrommel (2) durch Detektieren einer Abnormalität bei einer Drehung der angetriebenen Dreheinrichtung (17)zu detektieren.

4. Kühlmittelbehandlungsvorrichtung (100) nach Anspruch 1 oder 2, ferner umfassend:
eine Quetschwalze (8), die so angetrieben wird, dass sie sich mit der Drehtrommel (2) dreht,
wobei der Drehungsdetektor (10) konfiguriert ist, die Abnormalität bei der Drehung der Drehtrommel (2) durch Detektieren einer Abnormalität bei einer Drehung der Quetschwalze (8) zu detektieren.

5. Kühlmittelbehandlungsvorrichtung (100) nach einem der Ansprüche 1 bis 4, ferner umfassend:
einen Zufuhrströmungsweg (L3), der konfiguriert ist, die Kühlflüssigkeit dem Hauptkörper (1) zuzuführen;
einen Umgehungsströmungsweg (L7), der von dem Zufuhrströmungsweg (L3) abzweigt, um eine Zufuhr der Kühlflüssigkeit zu einem Hauptkörper (1) zu umgehen; und
ein Umschaltventil (V1), das konfiguriert ist, zwischen dem Zufuhrströmungsweg (L3) und dem Umgehungsströmungsweg (L7) umzuschalten,
wobei das Umschaltventil (V1) konfiguriert ist, einen Strömungsweg abhängig von der durch den Drehungsdetektor (10) detektierten Abnormalität bei der Drehung der Drehtrommel (2) umzuschalten.

6. Kühlmittelbehandlungsvorrichtung (100) nach einem der Ansprüche 1 bis 5, ferner umfassend:
eine Steuereinheit, die konfiguriert ist, von dem Drehungsdetektor (10) erhaltene Daten in zwei oder mehr Datenklassen zu unterteilen und einen Prozess, in Abhängigkeit von jeder Datenklasse durchzuführen.

## Revendications

1. Un dispositif de traitement de liquide de refroidissement (100) adapté pour éliminer un corps magnétique d'un liquide de refroidissement usagé, le dispositif (100) comprenant :
un tambour rotatif (2) dans lequel sont disposés plusieurs aimants, dans lequel
le dispositif de traitement de liquide de refroidissement (100) comprend en outre un détecteur de rotation (10), et
le détecteur de rotation (10) est configuré pour détecter une anomalie dans la rotation du tambour rotatif (2) ;
le dispositif de traitement de liquide de refroidissement (100) comprenant en outre : un moyen de réglage de la quantité d'entrée pour régler la quantité d'entrée du liquide de refroidissement s'écoulant dans un corps principal (1), dans lequel le moyen de réglage de la quantité d'entrée est configuré pour contrôler la quantité d'entrée en fonction de l'anomalie dans la rotation du tambour rotatif (2) détectée par le détecteur de rotation (10).

2. Le dispositif de traitement de liquide de refroidissement (100) selon la revendication 1, dans lequel
le corps principal (1) loge le tambour rotatif (2) à l'intérieur de celui-ci, et
le détecteur de rotation (10) est installé à l'extérieur du corps principal (1).

3. Le dispositif de traitement de liquide de refroidissement (100) selon la revendication 1 ou 2, comprenant en outre :
un rotor entraîné (17) qui est entraîné en rotation avec le tambour rotatif (2),
dans lequel le détecteur de rotation (10) est configuré pour détecter l'anomalie dans la rotation du tambour rotatif (2) en détectant une anomalie dans la rotation du rotor entraîné (17).

4. Le dispositif de traitement de liquide de refroidissement (100) selon la revendication 1 ou 2, comprenant en outre :
un rouleau de pressage (8) qui est entraîné en rotation avec le tambour rotatif (2),
dans lequel le détecteur de rotation (10) est configuré pour détecter l'anomalie dans la rotation du tambour rotatif (2) en détectant une anomalie dans la rotation du rouleau de pressage (8).

5. Le dispositif de traitement de liquide de refroidissement (100) selon l'une quelconque des revendications 1 à 4, comprenant en outre :
un chemin d'écoulement d'alimentation (L3) qui est configuré pour fournir le liquide de refroidissement au corps principal (1) ;
un chemin d'écoulement de dérivation (L7) qui bifurque à partir du
chemin d'écoulement d'alimentation (L3) pour éviter une alimentation en liquide de refroidissement du corps principal (1) ; et
une vanne de commutation (V1) qui est configurée pour commuter entre le chemin d'écoulement d'alimentation (L3) et le chemin d'écoulement de dérivation (L7),
dans lequel la vanne de commutation (V1) est configurée pour commuter un chemin d'écoulement en fonction de l'anomalie dans la rotation du tambour rotatif (2) détectée par le détecteur de rotation (10).

6. Le dispositif de traitement de liquide de refroidissement (100) selon l'une quelconque des revendications 1 à 5, comprenant en outre :
une unité de commande qui est configurée pour diviser les données obtenues auprès du détecteur de rotation (10) en deux ou plusieurs classes de données, et pour effectuer un processus en fonction de chaque classe de données.
